# EUROPÄISCHE PATENTSCHRIFT

(11) **EP 4 409 150 B1**
(45) Veröffentlichungstag und Bekanntmachung des Hinweises auf die Patenterteilung: **28.01.2026**
(21) Anmeldenummer: 22785964.2
(22) Anmeldetag: 12.09.2022
(51) Int. Cl.: F16C 33/66, F16H 57/029, F16J 15/3232, F16J 15/324

(54) **ANTRIEBSANORDNUNG UND FAHRZEUG MIT EINER SOLCHEN ANTRIEBSANORDNUNG**
DRIVE ASSEMBLY AND VEHICLE HAVING A DRIVE ASSEMBLY OF THIS TYPE
ENSEMBLE D'ENTRAÎNEMENT ET VÉHICULE MUNI D'UN TEL ENSEMBLE D'ENTRAÎNEMENT

(30) Priorität: 27.09.2021 DE 102021210737
(43) Veröffentlichungstag der Anmeldung: 07.08.2024
(73) Patentinhaber: Robert Bosch GmbH, 70442 Stuttgart (DE)
(72) Erfinder: ARMBRUSTER, Martin, 74336 Brackenheim (DE); HENN, Andreas, 73433 Aalen (DE); SARETZKI, Manfred, 70180 Stuttgart (DE); MEHNERT, Benjamin Lukas, 71701 Schwieberdingen (DE)
(86) Internationale Anmeldenummer: PCT/EP2022/075297
(87) Internationale Veröffentlichungsnummer: WO 2023/046515

(56) Entgegenhaltungen:
- EP-A1- 2 317 181
- DE-A1- 102011 088 644
- DE-B4- 102010 052 310
- DE-U1- 8 705 477

## Beschreibung

### Stand der Technik

Die Erfindung betrifft eine Antriebsanordnung, insbesondere für ein Fahrzeug, mit Merkmalen des Anspruchs 1, sowie ein Fahrzeug mit Merkmalen des nebengeordneten Anspruchs.

Zur Verringerung von Reibung und Verschleiß sowie zur Kühlung werden Getriebe mit einem Schmiermittel, meist Schmieröl, geschmiert. Um den Getriebewirkungsgrad zu steigern und die Kosten zu senken, wird soweit möglich auf eine Ölpumpe zur Förderung des Schmiermittels im Getriebe verzichtet. Bei Getrieben ohne Ölpumpe erfolgt die Schmierung und Kühlung der einzelnen Getriebeelemente durch eine passive Schmierölverteilung über die im Schmieröl planschenden Zahnräder (Planschschmierung). Durch Sammelbehälter und entsprechende Geometrien im Gehäuse kann das Schmieröl gezielt zu den zu schmierenden/kühlenden Komponenten (z. B. Lager, Radialwellendichtring, etc.) geleitet werden. Die Umwälzung und Förderleistung des Schmieröls durch die Zahnräder hängen dabei direkt von der Drehzahl und der Temperatur (Ölviskosität) ab.

Dies kann bei wenig bzw. keinem Schmieröl zu einem erhöhten Verschleiß bis hin zum Ausfall der jeweiligen Bauteile führen. Bei zu viel Schmieröl kann es zu erhöhten Verlusten im Lager oder zu Dichtheitsproblemen am Radialwellendichtring kommen. Die Beölung der Lager kann bspw. mittels Tieflochbohrungen umgesetzt werden. Diese sind jedoch aufwändig und teuer in der Herstellung.

EP 1 457 714 B1 und DE 10 2010 052 310 B4 beschreiben jeweils die Verwendung einer Stauscheibe zwischen einem Radialwellendichtring und einem Lager zur Führung eines zur Kühlung bzw. Schmierung des Lagers dienenden Schmiermittels.

Nachteilig dabei ist, dass die Schmierung des Lagers und das gezielte Leiten des Schmieröls an die Lagerstellen und den Radialwellendichtring nicht in sämtlichen Betriebszuständen gewährleistet werden kann.

Aus der DE 102010 052 310 B4 ist eine gattungsgemäße Antriebsanordnung mit einer Welle, einem Wälzlager, einem Radialwellendichtring und einem Stauring bekannt, der in einem Zwischenraum axial zwischen dem ersten Wälzlager und dem Radialwellendichtring angeordnet ist. Aus der DE 87 05 477 U1 ist eine elektrische Maschine mit einer Anordnung zur dauernden Schmierung eines Wälzlagers bekannt.

### Offenbarung der Erfindung

Erfindungsgemäß wird eine Antriebsanordnung, insbesondere für ein Fahrzeug vorgeschlagen, umfassend ein Getriebe mit einer Welle und einem ersten Wälzlager. Dabei kann die Welle als Eingangswelle ausgebildet sein. Das erste Wälzlager kann als Eingangswälzlager ausgebildet sein.

Die Welle ist in dem ersten Wälzlager gelagert. Das Getriebe umfasst zudem einen Radialwellendichtring, der an der Welle dichtend anliegt und das Getriebe nach außen hin abdichtet. Das Getriebe umfasst zudem einen Stauring, der in einem Zwischenraum axial zwischen dem ersten Wälzlager und dem Radialwellendichtring angeordnet ist. Dabei ist der Stauring eingerichtet, um ein Fluid in einem Zwischenraum zwischen dem ersten Wälzlager und dem Radialwellendichtring aufzustauen (aufzufangen bzw. zu sammeln). Bei dem Fluid kann es sich um Schmiermittel, insbesondere um Schmieröl, handeln. Der Stauring weist einen flächigen Ringkörper mit einem Durchgang, den die Welle durchdringt, und einen an dem Ringkörper angeordneten wannenartigen Abschnitt auf. Mit anderen Worten, die Welle erstreckt sich durch den Durchgang hindurch. Der Durchgang kann kreisförmig ausgebildet sein. Der Durchgang kann zentrisch im Ringkörper angeordnet sein. Der Stauring ist eingerichtet, um das Fluid innerhalb des wannenartigen Abschnitts aufzustauen. Der wannenartige Abschnitt weist eine Wandung auf, wobei der wannenartige Abschnitt mittels der Wandung in Richtung des ersten Wälzlagers und mittels des Ringkörpers in Richtung des Radialwellendichtrings begrenzt wird. Mit anderen Worten, der wannenartige Abschnitt wird in axialer Richtung durch die Wandung und durch den Ringkörper begrenzt.

Die erfindungsgemäße Ausgestaltung hat u.a. den Vorteil, dass das Fluid gezielt und zuverlässig an das erste Wälzlager und den Radialwellendichtring geleitet werden kann. Durch den Stauring kann die Menge des Fluides, das dem ersten Wälzlager und dem Radialwellendichtring zugeführt wird, gezielt eingestellt (verringert oder erhöht) werden. Dadurch können Lagerverluste am ersten Wälzlager und Undichtigkeiten am Radialwellendichtring zumindest in erheblichem Umfang reduziert oder gänzlich verhindert werden.

So kann bspw. durch eine Verringerung des zum Radialwellendichtring gelangenden Fluids ein anderer Radialwellendichtring inkl. einer Ableitfunktion der Wellenspannung ohne Undichtigkeiten eingesetzt werden und somit auf einen zweiten Erdungsring o.ä. verzichtet werden.

Gemäß einer Weiterbildung kann zwischen dem Ringkörper des Staurings und dem Radialwellendichtring mindestens eine Kammer angeordnet sein. Die Kammer wird insbesondere vom Ringkörper und dem Radialwellendichtring in axialer Richtung begrenzt. Die Kammer kann nach radial innen durch die Welle (bzw. deren Außenumfang) begrenzt werden. Die Kammer kann nach radial außen zumindest teilweise durch Wandungsabschnitte eines Getriebegehäuses (in dem das Getriebe angeordnet ist), durch einen Abschnitt des Radialwellendichtrings und/oder durch einen Abschnitt des Ringkörpers begrenzt werden. Die Kammer kann insbesondere die Gestalt eines Ringsraums aufweisen.

Der Ringkörper kann mindestens eine in den wannenartigen Abschnitt hineinragende Ausbuchtung (Ölablauf) aufweisen. Die Ausbuchtung kann insbesondere an dem bezogen auf die Schwerkraftrichtung unteren Ende des Ringkörpers angeordnet sein. Die Ausbuchtung kann eingerichtet sein, um in der Kammer aufgestautes Fluid aus der Kammer (also von dem Radialwellendichtring weg) abzuführen.

Insbesondere definiert die Ausbuchtung zusammen mit einem Wandungsabschnitt des Getriebegehäuses einen Abschnitt eines Fluid- bzw. Schmiermittelkanals, der von der Kammer bzw. vom Radialwellendichtring bspw. zu einem weiteren Wälzlager führt. Mit anderen Worten, mittels der Ausbuchtung kann eine Strömungsverbindung zwischen der Kammer und einem Lagersitz des weiteren Wälzlagers herstellt werden.

Vorliegend ist mit "axial" bzw. "axiale Richtung" eine parallel zur Mittellängsachse der Welle ausgerichtete Richtung gemeint. Entsprechend ist mit "radial" bzw. "radiale Richtung" eine senkrecht zur Mittellängsachse der Welle ausgerichtete und von der Mittellängsachse ausgehende Richtung gemeint.

Gemäß einer Weiterbildung kann der Ringkörper mindestens eine Öffnung aufweisen. Die Öffnung kann insbesondere an dem bezogen auf die Schwerkraftrichtung oberen Abschnitt des Ringkörpers angeordnet sein. Der Zwischenraum und die Kammer können mittels der Öffnung fluidisch miteinander gekoppelt bzw. strömungsverbunden sein.

Alternativ oder zusätzlich können der Zwischenraum und die Kammer mittels des Durchgangs fluidisch miteinander gekoppelt bzw. strömungsverbunden sein. Dabei bildet insbesondere ein freibleibender Ringraum zwischen dem Außendurchmesser der Welle und Innendurchmesser des Durchgangs eine Strömungsverbindung zwischen dem Zwischenraum und der Kammer.

Mit einer fluidischen Verbindung oder Strömungsverbindung ist vorliegend gemeint, dass ein Gas und/oder ein Fluid (Flüssigkeit) zwischen zwei fluidisch gekoppelten Elementen bzw. zwischen zwei in fluidischer Verbindung stehender Elemente fließen kann.

Durch das Variieren der Form und/oder des Durchmessers der Öffnung und/oder des Durchgangs kann somit die Menge des Fluides eingestellt werden, das zwischen dem Zwischenraum und der Kammer fließen kann.

Gemäß einer Weiterbildung kann die Wandung eine geringere radiale (d.h. nach radial innen gerichtete) Erstreckung aufweisen, als der den wannenartigen Abschnitt in Richtung des Radialwellendichtrings begrenzende Abschnitt des Ringkörpers. Mit anderen Worten, die Wandung hat insbesondere eine geringere Höhe (bezogen auf die Schwerkraftrichtung) und/oder eine kleinere Fläche als der den wannenartigen Abschnitt in Richtung des Radialwellendichtrings begrenzende Abschnitt des Ringkörpers.

Damit kann gewährleistet werden, dass das Fluid aus dem wannenartigen Abschnitt, sobald dieser mit Fluid vollgelaufen bzw. gefüllt ist, (zunächst) in Richtung des ersten Wälzlagers und nicht in Richtung des Radialwellendichtrings bzw. der zwischen dem Ringkörper des Staurings und dem Radialwellendichtring angeordneten Kammer fließen kann.

Gemäß einer Weiterbildung kann das Getriebe mindestens eine Fluidsammelkammer zum Sammeln des Fluides (Bevorratung) und mindestens einen Zuführkanal aufweisen. Dabei können die Fluidsammelkammer und/oder der Zuführkanal eingerichtet sein, um das Fluid aus der Fluidsammelkammer mittels des Zuführkanals dem Zwischenraum zuzuführen. Der Zuführkanal verbindet insbesondere die Fluidsammelkammer und den Zwischenraum fluidisch miteinander.

Die Antriebsanordnung kann eine elektrische Maschine aufweisen, die mit der Welle gekoppelt sein kann, so dass die elektrische Maschine die Welle drehend antreiben kann.

Die Antriebsanordnung kann bspw. als E-Achse ausgebildet sein oder Bestandteil einer E-Achse bilden.

Gemäß einer Weiterbildung kann das Getriebe mindestens einen Abführkanal aufweisen. Der Abführkanal kann eingerichtet sein, um das im Zwischenraum vorhandene Fluid bezogen auf die Schwerkraftrichtung im oberen Bereich, insbesondere oberhalb, des wannenartigen Abschnitts aus dem Zwischenraum abzuführen.

Gemäß einer Weiterbildung kann das Getriebe ein zweites Wälzlager umfassen. Das zweite Wälzlager kann als ein Zwischenwellenlager ausgebildet sein. Der Abführkanal kann eingerichtet sein, um das Fluid aus dem Zwischenraum dem zweiten Wälzlager zuzuführen. Der Zwischenraum und das zweite Wälzlager sind insbesondere mittels des Abführkanals fluidisch miteinander gekoppelt.

Erfindungsgemäß wird ein Fahrzeug, insbesondere ein Kraftfahrzeug, mit einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen und/oder die nachfolgend noch erläuterten Maßnahmen dienen.

Nachfolgend wird eine Ausführungsform der Erfindung unter Bezugnahme auf die beiliegenden Zeichnungen erläutert. Es zeigen:
- Figur 1: eine perspektivische Schnittansicht auf einen Teil einer Antriebsanordnung;
- Figur 2: eine Schnittansicht auf einen Teil der Antriebsanordnung gemäß Figur 1;
- Figur 3: eine perspektivische Darstellung eines Staurings; und
- Figur 4: eine weitere perspektivische Darstellung des Staurings gemäß Figur 3.

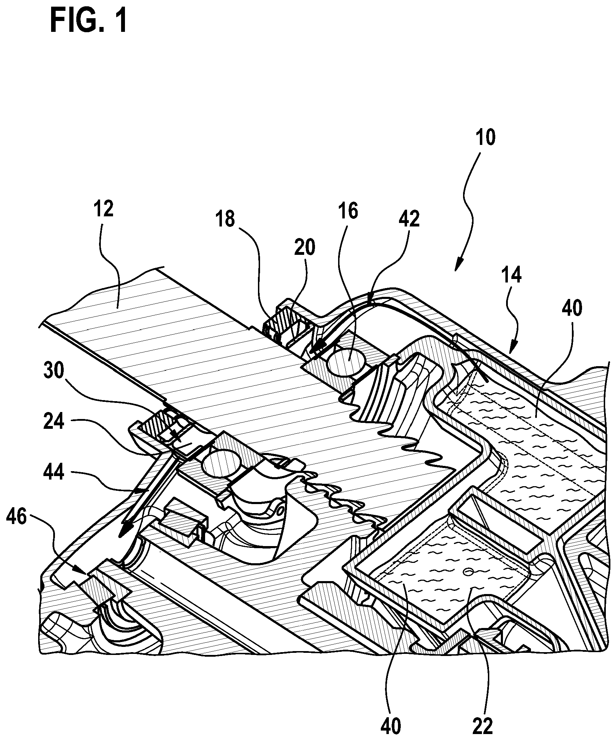

Die Antriebsanordnung trägt in Figur 1 insgesamt das Bezugszeichen 10. Die Antriebsanordnung 10 umfasst ein Getriebe 14 mit einer Welle 12 und einem ersten Wälzlagers 16. Die Welle 12 ist in dem ersten Wälzlager 16 gelagert. Das Getriebe 14 umfasst zudem einen Radialwellendichtring 18. Dieser liegt dichtend an der Welle 12 an und dichtet das Getriebe 14 nach außen hin ab.

Das erste Wälzlager 16 und der Radialwellendichtring 18 begrenzen einen Zwischenraum 24. Das Getriebe umfasst zudem einen Stauring 20, der axial zwischen dem ersten Wälzlager 16 und dem Radialwellendichtring 18 (also im Zwischenraum 24) angeordnet ist. Der Stauring 20 ist eingerichtet, um ein Fluid 22, vorliegend in Form von Schmieröl, im Zwischenraum 24 aufzustauen.

Das Getriebe 14 weist vorliegend zwei Fluidsammelkammern 40 zum Sammeln und Bevorraten des Fluides 22 auf. Die beiden Fluidsammelkammern 40 sind fluidisch miteinander verbunden. Das Getriebe 14 weist weiter einen Zuführkanal 42 auf, wobei der Zuführkanal 42 die beiden Fluidsammelkammern 40 fluidisch mit dem Zwischenraum 24 verbindet. Mit anderen Worten, das in den Fluidsammelkammern 40 gesammelte Fluid 22 kann mittels des Zuführkanals 42 dem Zwischenraum 24 zugeführt werden. Der entsprechende Fluss des Fluides 22 ist in Figur 1 mittels eines gekrümmten Pfeils angedeutet.

Das Getriebe 14 weist weiter einen Abführkanal 44 auf. Der Abführkanal 44 verbindet den Zwischenraum 24 mit einem zweiten Wälzlager 46 fluidisch. Mit anderen Worten, das Fluid 22 kann aus dem Zwischenraum 24 über den Abführkanal 44 zum zweiten Wälzlager 46 geleitet werden. Der entsprechende Fluss des Fluides 22 ist in Figur 1 mittels eines geraden Pfeils angedeutet.

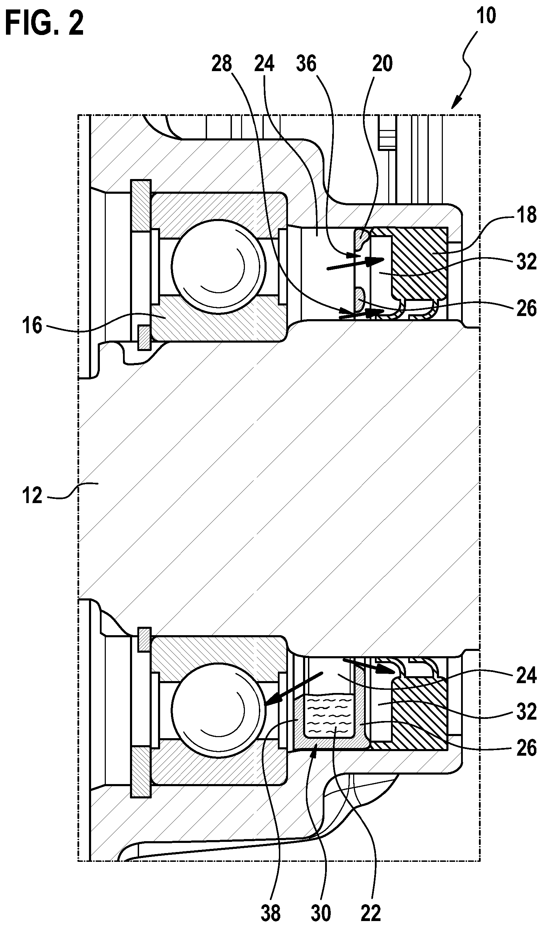

Figur 2 zeigt eine Schnittansicht auf einen Teil der Antriebsanordnung 10 gemäß Figur 1. Die Schwerkraftrichtung zeigt in Figur 2 nach unten. Der Stauring 20 weist einen flächigen Ringkörper 26 mit einem vorliegend kreisförmigen und zentrisch angeordneten Durchgang 28 auf, in dem die Welle 12 angeordnet ist.

An seinem bezogen auf die Schwerkraftrichtung oberen Abschnitt (also in Figur 2 oben) weist der Ringkörper 26 eine Öffnung 36 auf. An seinem bezogen auf die Schwerkraftrichtung unteren Abschnitt (also in Figur 2 unten) weist der Ringkörper 26 einen wannenartigen Abschnitt 30 auf.

Zwischen dem Stauring 20 und dem Radialwellendichtring 18 ist eine Kammer 32 angeordnet. Diese ist ringförmig ausgebildet und wird in axialer Richtung von dem Radialwellendichtring 18 und dem Ringkörper 26 des Staurings 20 begrenzt. In radialer Richtung wird die Kammer 32 zum einen von dem Außenumfang der Welle 12 (nach radial innen) und zum anderen von einem Abschnitt des Staurings 20 und einem Abschnitt des Radialwellendichtrings 18 (nach radial außen) begrenzt.

Das in den Zwischenraum 24 geleitete Fluid 22 kann aus dem Zwischenraum 24 in die Kammer 32 durch die Öffnung 36 und den Durchgang 28 (bzw. den radialen Zwischenraum zwischen dem Innenumfang des Durchgangs 28 und dem Außenumfang der Welle 12) geleitet werden. Der entsprechende Fluss des Fluides 22 ist in Figur 2 mittels Pfeilen angedeutet. Durch das Variieren der Durchmesser der Öffnung 36 und/oder des Durchgangs 28 kann die Menge des Fluides 22, das aus dem Zwischenraum 24 in die Kammer 32 geleitet wird gezielt eingestellt werden.

Der wannenartige Abschnitt 30 weist eine Wandung 38 auf, die den wannenartigen Abschnitt 30 in Richtung des ersten Wälzlagers 16 (in Figur 2 nach links) begrenzt. Das in den Zwischenraum 24 geleitete Fluid 22 wird in dem wannenartigen Abschnitt 30 des Staurings 20 gesammelt. Sobald der wannenartige Abschnitt 30 mit dem Fluid 22 vollgelaufen ist, fließt das Fluid 22 aus dem wannenartigen Abschnitt 30 zunächst in Richtung des ersten Wälzlagers 16. Der entsprechende Fluss des Fluides 22 ist in Figur 2 mittels eines Pfeils angedeutet.

Hierzu ist die Wandung 38 derart ausgebildet, dass die radiale Erstreckung der Wandung 38 kleiner ist, als die radiale Erstreckung des Ringkörpers 26, der den wannenartigen Abschnitt 30 in Richtung des Radialwellendichtrings 18 (in Figur 2 nach rechts) begrenzt. Mit anderen Worten, die Wandung 38 weist eine geringere Höhe auf (bezogen auf die Schwerkraftrichtung) als der Ringkörper 26, der den wannenartigen Abschnitt 30 in Richtung des Radialwellendichtrings 18 begrenzt.

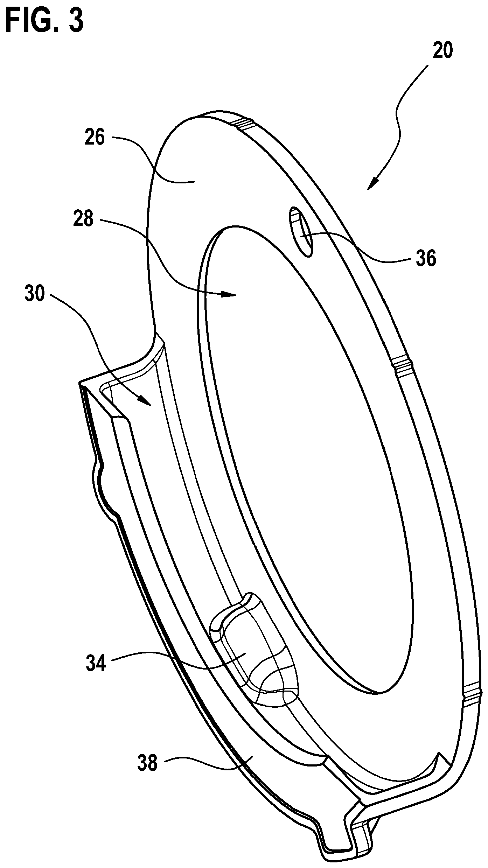

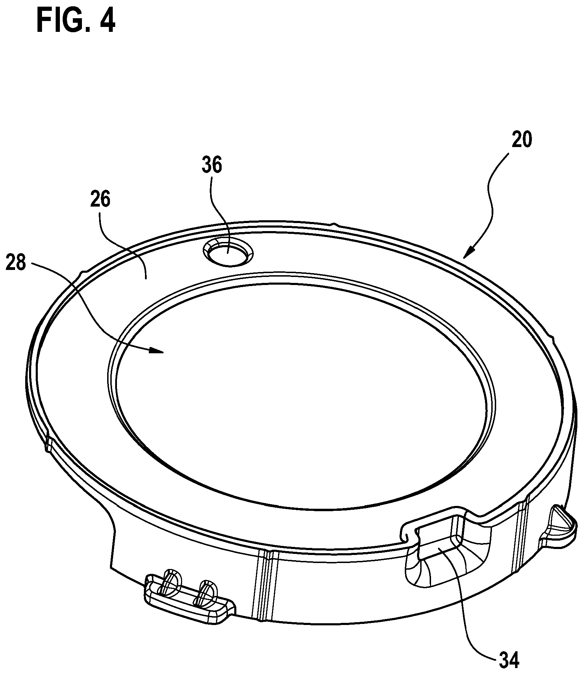

Figur 3 zeigt eine perspektivische Darstellung des Staurings 20 gemäß einer weiteren Ausbildungsform. Figur 4 zeigt eine weitere perspektivische Darstellung des Staurings 20 gemäß Figur 3. Es ist zu erkennen, dass der Ringkörper 26 des Staurings 20 an seinem bezogen auf die Schwerkraftrichtung unteren Ende eine in den wannenartigen Abschnitt 30 hineinragende Ausbuchtung 34 aufweist.

Die Ausbuchtung 34 bildet zusammen mit einem Wandungsabschnitt eines Getriebegehäuses, das das Getriebe 14 nach außen hin begrenzt, einen Abschnitt eines Fluid- bzw. Schmiermittelkanals, der vom Radialwellenring 18 bspw. zu einem weiteren Wälzlager führt (nicht dargestellt). Mit anderen Worten, mittels der Ausbuchtung 34 kann aus der Kammer 32 Fluid 22 abgeführt werden.

## Patentansprüche

1. Antriebsanordnung (10), insbesondere für ein Fahrzeug, umfassend ein Getriebe (14) mit einer Welle (12), insbesondere einer Eingangswelle, und einem ersten Wälzlager (16), insbesondere Eingangswellenlager, wobei die Welle (12) in dem ersten Wälzlager (16) gelagert ist, wobei das Getriebe (14) einen Radialwellendichtring (18) umfasst, der an der Welle (12) dichtend anliegt und das Getriebe (14) nach außen hin abdichtet, wobei das Getriebe (14) zudem einen Stauring (20) umfasst, der in einem Zwischenraum (24) axial zwischen dem ersten Wälzlager (16) und dem Radialwellendichtring (18) angeordnet ist, wobei der Stauring (20) eingerichtet ist, um ein Fluid (22), insbesondere ein Schmiermittel, in einem Zwischenraum (24) zwischen dem ersten Wälzlager (16) und dem Radialwellendichtring (18) aufzustauen, wobei der Stauring (20) einen flächigen Ringkörper (26) mit einem, insbesondere kreisförmigen und/oder zentrisch angeordneten, Durchgang (28), den die Welle (12) durchdringt, und einen an dem Ringkörper (26) angeordneten wannenartigen Abschnitt (30) aufweist, wobei der Stauring (20) eingerichtet ist, um das Fluid (22) innerhalb des wannenartigen Abschnitts (30) aufzustauen, **dadurch gekennzeichnet, dass** der wannenartige Abschnitt (30) eine Wandung (38) aufweist, wobei der wannenartige Abschnitt (30) mittels der Wandung (38) in Richtung des ersten Wälzlagers (16) und mittels des Ringkörpers (26) in Richtung des Radialwellendichtrings (18) begrenzt wird.

2. Antriebsanordnung (10) nach Anspruch 1, **dadurch gekennzeichnet, dass** zwischen dem Ringkörper (26) des Staurings (10) und dem Radialwellendichtring (18) mindestens eine Kammer (32) angeordnet ist, wobei der Ringkörper (26), insbesondere an seinem bezogen auf die Schwerkraftrichtung unteren Ende, mindestens eine in den wannenartigen Abschnitt (30) hineinragende Ausbuchtung (34) aufweist, wobei die Ausbuchtung (34) eingerichtet ist, um in der Kammer (32) aufgestautes Fluid (22) aus der Kammer (30) abzuführen.

3. Antriebsanordnung (10) nach Anspruch 2, **dadurch gekennzeichnet, dass** der Ringkörper (26), insbesondere an seinem bezogen auf die Schwerkraftrichtung oberen Abschnitt, mindestens eine Öffnung (36) aufweist, wobei der Zwischenraum (24) und die Kammer (30) mittels der Öffnung (36) und/oder mittels des Durchgangs (28) fluidisch miteinander gekoppelt sind.

4. Antriebsanordnung (10) nach Anspruch 1, **dadurch gekennzeichnet, dass** die Wandung (38) eine geringere radiale Erstreckung aufweist, als der den wannenartigen Abschnitt (30) in Richtung des Radialwellendichtrings (18) begrenzende Abschnitt des Ringkörpers (26).

5. Antriebsanordnung (10) nach einem der voranstehenden Ansprüche, **dadurch gekennzeichnet, dass** das Getriebe (14) mindestens eine Fluidsammelkammer (40) zum Sammeln des Fluids (22) und mindestens einen Zuführkanal (42) aufweist, wobei die Fluidsammelkammer (40) und/oder der Zuführkanal (42) eingerichtet sind, um das Fluid (22) aus der Fluidsammelkammer (40) mittels des Zuführkanals (42) dem Zwischenraum (24) zuzuführen und/oder dass die Antriebsanordnung (10) eine elektrische Maschine aufweist, die mit der Welle (12) gekoppelt ist, so dass die elektrische Maschine die Welle (12) drehend antreiben kann.

6. Antriebsanordnung (10) nach einem der Ansprüche 1 bis 5, **dadurch gekennzeichnet, dass** das Getriebe (14) mindestens einen Abführkanal (44) aufweist, wobei der Abführkanal (44) eingerichtet ist, um das im Zwischenraum (24) vorhandene Fluid (22) bezogen auf die Schwerkraftrichtung im oberen Bereich, insbesondere oberhalb, des wannenartigen Abschnitts (30) aus dem Zwischenraum (24) abzuführen.

7. Antriebsanordnung (10) nach Anspruch 6, **dadurch gekennzeichnet, dass** das Getriebe (14) ein zweites Wälzlager (46), insbesondere ein Zwischenwellenlager, umfasst, wobei der Abführkanal (44) eingerichtet ist, um das Fluid (22) aus dem Zwischenraum (24) dem zweiten Wälzlager (46) zuzuführen.

8. Fahrzeug, insbesondere Kraftfahrzeug, mit einer Antriebsanordnung (10) nach einem der voranstehenden Ansprüche.

## Claims

1. Drive assembly (10), in particular for a vehicle, comprising a transmission (14) with a shaft (12), in particular an input shaft, and a first anti-friction bearing (16), in particular input shaft bearing, wherein the shaft (12) is mounted in the first anti-friction bearing (16), wherein the transmission (14) comprises a radial shaft sealing ring (18) which bears sealingly against the shaft (12) and seals the transmission (14) towards the outside, wherein the transmission (14) additionally comprises a restrictor ring (20) which is arranged axially between the first anti-friction bearing (16) and the radial shaft sealing ring (18) in an intermediate space (24), wherein the restrictor ring (20) is configured to accumulate a fluid (22), in particular a lubricant, in an intermediate space (24) between the first anti-friction bearing (16) and the radial shaft sealing ring (18), wherein the restrictor ring (20) has a flat annular body (26) with a passage (28), in particular circular and/or centrally arranged, which the shaft (12) penetrates, and a pan-like section (30) arranged on the annular body (26), wherein the restrictor ring (20) is configured to accumulate the fluid (22) within the pan-like section (30), **characterized in that** the pan-like section (30) has a wall (38), wherein the pan-like section (30) is delimited by means of the wall (38) in the direction of the first anti-friction bearing (16) and by means of the annular body (26) in the direction of the radial shaft sealing ring (18).

2. Drive assembly (10) according to Claim 1, **characterized in that** at least one chamber (32) is arranged between the annular body (26) of the restrictor ring (10) and the radial shaft sealing ring (18), wherein the annular body (26) has, in particular at its lower end with respect to the direction of gravity, at least one bulge (34) protruding into the pan-like section (30), wherein the bulge (34) is configured to discharge fluid (22) accumulated in the chamber (32) from the chamber (30).

3. Drive assembly (10) according to Claim 2, **characterized in that** the annular body (26) has, in particular at its upper section relative to the direction of gravity, at least one opening (36), wherein the intermediate space (24) and the chamber (30) are fluidically coupled to each other by means of the opening (36) and/or by means of the passage (28).

4. Drive assembly (10) according to Claim 1, **characterized in that** the wall (38) has a smaller radial extent than the portion of the annular body (26) delimiting the pan-like section (30) in the direction of the radial shaft sealing ring (18).

5. Drive assembly (10) according to one of the preceding claims, **characterized in that** the transmission (14) has at least one fluid collection chamber (40) for collecting the fluid (22) and at least one supply channel (42), wherein the fluid collection chamber (40) and/or the supply channel (42) are configured to supply the fluid (22) from the fluid collection chamber (40) by means of the feed channel (42) to the intermediate space (24), and/or **in that** the drive assembly (10) has an electric machine which is coupled to the shaft (12) such that the electric machine can drive the shaft (12) rotationally.

6. Drive assembly (10) according to any of Claims 1 to 5, **characterized in that** the transmission (14) has at least one discharge channel (44), wherein the discharge channel (44) is configured to remove the fluid (22) present in the intermediate space (24) from the intermediate space (24) in the upper region of, in particular above, the pan-like section (30) relative to the direction of gravity.

7. Drive assembly (10) according to Claim 6, **characterized in that** the transmission (14) comprises a second anti-friction bearing (46), in particular an intermediate shaft bearing, wherein the discharge channel (44) is configured to supply the fluid (22) from the intermediate space (24) to the second anti-friction bearing (46).

8. Vehicle, in particular motor vehicle, having a drive assembly (10) according to one of the preceding claims.

## Revendications

1. Agencement d'entraînement (10), notamment pour un véhicule, comprenant une transmission (14) avec un arbre (12), notamment un arbre d'entrée, et un premier palier à roulement (16), notamment un palier d'arbre d'entrée, l'arbre (12) étant monté dans le premier palier à roulement (16), la transmission (14) comprenant une bague d'étanchéité d'arbre radiale (18) qui s'applique de manière étanche contre l'arbre (12) et qui assure l'étanchéité de la transmission (14) vers l'extérieur, la transmission (14) comprenant en outre une bague de retenue (20) qui est agencée dans un espace intermédiaire (24) axialement entre le premier palier à roulement (16) et la bague d'étanchéité d'arbre radiale (18), la bague de retenue (20) étant adaptée pour retenir un fluide (22), notamment un lubrifiant, dans un espace intermédiaire (24) entre le premier palier à roulement (16) et la bague d'étanchéité d'arbre radiale (18), la bague de retenue (20) présentant un corps annulaire plat (26) avec un passage (28), notamment circulaire et/ou agencé de manière centrée, que traverse l'arbre (12), et une section de type cuvette (30) agencée sur le corps annulaire (26), la bague de retenue (20) étant adaptée pour retenir le fluide (22) à l'intérieur de la section de type cuvette (30), **caractérisé en ce que** la section de type cuvette (30) présente une paroi (38), la section de type cuvette (30) étant délimitée au moyen de la paroi (38) en direction du premier palier à roulement (16) et au moyen du corps annulaire (26) en direction de la bague d'étanchéité d'arbre radiale (18).

2. Agencement d'entraînement (10) selon la revendication 1, **caractérisé en ce qu'**au moins une chambre (32) est agencée entre le corps annulaire (26) de la bague de retenue (10) et la bague d'étanchéité d'arbre radiale (18), le corps annulaire (26) présentant, notamment à son extrémité inférieure par rapport à la direction de la force de gravité, au moins un renflement (34) faisant saillie dans la section de type cuvette (30), le renflement (34) étant adapté pour évacuer le fluide (22) retenu dans la chambre (32) hors de la chambre (30).

3. Agencement d'entraînement (10) selon la revendication 2, **caractérisé en ce que** le corps annulaire (26) présente, notamment dans sa section supérieure par rapport à la direction de la force de gravité, au moins une ouverture (36), l'espace intermédiaire (24) et la chambre (30) étant couplés fluidiquement entre eux au moyen de l'ouverture (36) et/ou au moyen du passage (28).

4. Agencement d'entraînement (10) selon la revendication 1, **caractérisé en ce que** la paroi (38) présente une extension radiale inférieure à celle de la section du corps annulaire (26) qui délimite la section de type cuvette (30) en direction du joint d'étanchéité d'arbre radial (18).

5. Agencement d'entraînement (10) selon l'une quelconque des revendications précédentes, **caractérisé en ce que** la transmission (14) présente au moins une chambre de collecte de fluide (40) pour collecter le fluide (22) et au moins un canal d'acheminement (42), la chambre de collecte de fluide (40) et/ou le canal d'acheminement (42) étant adaptés pour acheminer le fluide (22) de la chambre de collecte de fluide (40) à l'espace intermédiaire (24) au moyen du canal d'acheminement (42) et/ou **en ce que** l'agencement d'entraînement (10) présente une machine électrique qui est couplée à l'arbre (12) de telle sorte que la machine électrique peut entraîner l'arbre (12) en rotation.

6. Agencement d'entraînement (10) selon l'une quelconque des revendications 1 à 5, **caractérisé en ce que** la transmission (14) présente au moins un canal d'évacuation (44), le canal d'évacuation (44) étant adapté pour évacuer le fluide (22) présent dans l'espace intermédiaire (24) par rapport à la direction de la force de gravité dans la zone supérieure, notamment au-dessus de la section de type cuvette (30), hors de l'espace intermédiaire (24).

7. Agencement d'entraînement (10) selon la revendication 6, **caractérisé en ce que** la transmission (14) comprend un deuxième palier à roulement (46), notamment un palier d'arbre intermédiaire, le canal d'évacuation (44) étant adapté pour acheminer le fluide (22) depuis l'espace intermédiaire (24) vers le deuxième palier à roulement (46).

8. Véhicule, notamment véhicule automobile, avec un agencement d'entraînement (10) selon l'une quelconque des revendications précédentes.
